# EUROPÄISCHE PATENTSCHRIFT

(11) **EP 3 381 661 B1**
(45) Veröffentlichungstag und Bekanntmachung des Hinweises auf die Patenterteilung: **11.03.2020**
(21) Anmeldenummer: 17168263.6
(22) Anmeldetag: 26.04.2017
(51) Int. Cl.: B29C 65/20

(54) **FAHRBARER HEIZKEILSCHWEISSAUTOMAT, HEIZKEIL UND SCHWEISSVERFAHREN**
MOBILE HEATED WEDGE WELDER, HEATING WEDGE AND WELDING METHOD
AUTOMATE MOBILE DE SOUDAGE PAR COIN CHAUFFANT, COIN CHAUFFANT ET PROCÉDÉ DE SOUDAGE

(30) Priorität: 28.03.2017 EP 17163343
(43) Veröffentlichungstag der Anmeldung: 03.10.2018
(73) Patentinhaber: Leister Technologies AG, 6056 Kägiswil (CH)
(72) Erfinder: von Wyl, Bruno, 6056 Kägiswil (CH); Christen, Alois, 6055 Alpnach Dorf (CH)
(74) Vertreter: Klocke, Peter

(56) Entgegenhaltungen:
- EP-A2- 0 406 223
- CH-A2- 701 447
- CH-A5- 608 417
- DE-A1- 3 640 187
- DE-U- 7 404 530
- DE-U1- 8 808 693
- DE-U1- 9 317 104
- FR-A1- 2 572 998
- US-A1- 2014 227 044
- US-B1- 6 390 168

## Beschreibung

Die vorliegende Erfindung betrifft einen Heizkeil für einen Heizkeilschweißautomaten mit einer oberen Führungsfläche für eine Oberfolie und einer unteren Führungsfläche für eine Unterfolie und eine Heizkeilspitze, einen fahrbaren Heizkeilschweißautomat zum Verschweißen von Kunststofffolien mit mindestens einem Heizkeil mit mindestens einer oberen und mindestens einer unteren Andrückrolle mindestens im thermischen Kontaktbereich des mindestens einen Heizkeils sowie ein Verfahren zum Verschweißen von dünnen Kunststofffolien.

Heizkeile zum Verschweißen von Kunststofffolien und Kunststoffbahnen, insbesondere mittels eines fahrbaren Heizkeilschweißautomats sind bekannt. Der Heizkeil wird benutzt, um überlappend aufeinander liegende Kunststofffolien und -bahnen (Oberfolie und Unterfolie) während der Bewegung des an dem fahrbaren Heizkeilschweißautomat befestigten Heizkeils die Kunststofffolien und - bahnen zu erwärmen und zu plastifizieren, so dass sie dann mit dem im vorderen Bereich des Heizkeils angeordneten oberen und unteren Andrückrollen gegeneinander gepresst und verschweißt werden können.

Die Verwendung von Heizkeilschweißautomaten erfolgt in der Praxis in der Regel bei Kunststofffolien und -bahnen bei einer Materialstärke ab 1 mm. Bei besonders dünnen Kunststofffolien von weniger als 1 mm und insbesondere weniger als 0,3 mm ist es nicht möglich, diese mit einem fahrbaren Schweißautomaten miteinander zu verschweißen. Die Verschweißung erfolgt in der Regel stationär. Insbesondere können derart dünne Kunststofffolien mit herkömmlichen Heizkeilen nur schwer verschweißt werden, weil bei diesen dünnen Kunststofffolien nur eine dünne Schicht aufgeschmolzen werden darf, da sonst das Material instabil und beschädigt wird (Lochbildung). Ferner neigen dünne, mit einem herkömmlichen Heizkeil verschweißte Materialien entlang des Randes einer Schweißnaht aufgrund einer Materialverjüngung/Kerbwirkung aufzureißen. Schließlich neigen dünne Materialien zu Wellenrümpfen, da der nicht aufgeschmolzene Anteil zu wenig Halt bietet. Eine Möglichkeit, dünne Materialien mit einem Heizkeil einigermaßen zuverlässig zu verschweißen, besteht darin, sehr hohe Schweißgeschwindigkeiten zu verwenden. Allerdings sind solche Geschwindigkeiten mit einem fahrbaren Heizkeilschweißautomaten nicht realisierbar und können höchstens bei stationären, vollautomatischen Schweißeinlagen verwendet werden.

Die FR 2 572 998 beschreibt eine stationäre Schweißmaschine zum Verschweißen von Kunststofffolien mit einem Schweißstempel, der mindestens zwei voneinander beabstandete die Schweißung durchführende beheizbare Erhebungen aufweist, so dass mindestens zwei parallel verlaufende voneinander beabstandete Schweißnähte entstehen.

Die EP 0 406 223 A2 beschreibt eine verfahrbare Vorrichtung zum randseitigen Verbinden überlappende Bahnen aus thermoplastischem Kunststoff, die einen keilförmigen Heizkörper aufweist, der in einem Spalt zwischen zwei Schweißrollen angeordnet ist. Der keilförmige Schweißkörper weist eine obere Führungsfläche für die Oberfolie und eine untere Führungsfläche für die Unterfolie auf, wobei im vorderen der Heizkeilspitze zugewandten Bereich die Führungsfläche eine Vertiefung aufweist.

Aus der DE 74 04 530 U1 ist eine Schweißvorrichtung mit einer oberen und einer unteren Andrückrolle bekannt, bei der ein im Bereich der Heizkeilspitze U-förmig ausgebildeter Heizkeil verwendet wird, um einen Prüfkanal zwischen zwei breiten Schweißnähten auszubilden.

Eine entsprechende Ausgestaltung ist in der CH 701 447 A2 bezüglich der Form des Heizkeils offenbart. Der dort beschriebene Heizkeil weist außerdem noch eine Schleppzunge auf, über die die den Prüfkanal bildende Vertiefung über die spitzwinklige Heizkeilspitze hinaus verlängert werden kann.

Die US 2014/227044 A1 beschreibt ebenfalls einen Heizkeil für einen Prüfkanal mit der Möglichkeit einer zusätzlichen Schleppzunge an der Spitze. Zusätzlich weist der Heizkeil im Bereich der Heizkeilspitze auf der Oberseite schmale sich in Längsrichtung erstreckende Erhebungen auf beiden Seiten der Vertiefung für den Prüfkanal auf, die dazu dienen, durch eine in der zu verarbeitenden Geomembran integrierten leitfähigen unteren Fläche hin durchzudringen und damit zu schneiden. Die US 2014/227044 A1 offenbart ein Verfahren zum Verschweißen von Kunststofffolien, wobei die zu verschweißenden Kunststofffolien mittels eines fahrbaren Heizkeilschweißautomats verschweißt werden, wobei diese über einen Heizkeil mit einem integrierten Kontaktelement geführt werden, das die Kunststofffolien über einen Bruchteil der Breite des Heizkeils mit einer auf eine Schweißnahtbreite im Bereich von ausgelegten Kontaktfläche des Kontaktelements thermisch kontaktieren, so dass eine in Bewegungsrichtung der Kunststofffolien verlaufende Schweißnaht entsprechend der Breite der thermischen Kontaktfläche mit dem Heizkeil gebildet wird.

Aus der CH 608 417 A5 ist ebenfalls ein Heizkeil bekannt, der zwischen Auflageflächen für die Verschweißung einer Vertiefung für einen Prüfkanal bei den miteinander verschweißten Folien aufweist.

Auch die US 6 390 168 B1 beschreibt einen entsprechenden Heizkeil mit einer Vertiefung zwischen den die Verschweißung bedeckenden Auflageflächen für einen Prüfkanal.

In der DE 36 40 187 A1 wird eine stationäre Kunststoffschweißmaschine mit einem Schweißkeil beschrieben, der im vorderen, mit der Heizkeilkante abschließenden Teil in den Eckbereichen an die Keilform angepasste Einsätze aufweist, die aus rostfreiem Stahl bestehen. Dadurch wird eine Heizkeilspitze mit drei unmittelbar ineinander angrenzenden, parallel zur Vorschubrichtung verlaufenden Abschnitten vorgesehen, von denen der mittlere Abschnitt aus einem anderen Werkstoff bezüglich der Wärmeleitfähigkeit als die äußeren Abschnitte übersteht.

Die aus dem Stand der Technik bekannten Heizkeile dienen im Wesentlichen dazu, bei der Verschweißung von Kunststofffolien einen Prüfkanal vorzusehen, so dass die Heizkeile mindestens im Bereich der Heizkeilspitze mittig eine in Vorschubrichtung sich erstreckende Vertiefung aufweisen, um dort einen nicht verschweißten Bereich zwischen zwei breiten, im Wesentlichen jeweils ein Drittel der Heizkeilbreite überstreichenden Schweißnähte vorzusehen. Lediglich die US 2014/227044 A1 (D5) offenbart auf dem die Schweißnaht bildenden Flächen noch zusätzliche in Längsrichtung erstreckende dünne Erhebungen, die für den speziellen Anmeldungsfall der Verschweißung von Geomembranen dazu dienen, die untere leitfähige Schicht der Geomembran zu durchdringen. Alle diese bekannten Heizkeile sind nicht dazu geeignet, Kunststofffolien von weniger als ein Millimeter Dicke aus den vorstehend genannten Gründen zu verschweißen.

Der vorliegenden Erfindung liegt daher die Aufgabe zugrunde, eine Möglichkeit vorzuschlagen, mit der besonders dünne, polymere Materialien in Form von Kunststofffolien zuverlässig mit einem fahrbaren Heizkeilschweißautomaten verschweißt werden können.

Diese Aufgabe wird erfindungsgemäß durch einen Heizkeil mit den Merkmalen des Anspruchs 1, sowie durch einen fahrbaren Heizkeilschweißautomat gemäß Anspruch 4 und einem Verfahren zum Verschweißen von dünnen Kunststofffolien gemäß Anspruch 6 gelöst. Weitere vorteilhafte Ausgestaltungen sind den jeweiligen rückbezogenen Unteransprüchen zu entnehmen.

Danach weist der erfindungsgemäße Heizkeil mindestens ein Kontaktelement im Bereich der Heizkeilspitze zur thermischen Kontaktierung der Ober- und Unterfolie entlang eines Bruchteils der Länge und Breite des Heizkeils auf. Durch dieses mindestens eine thermische Kontaktelement, von dem vorzugsweise zwei oder drei über die Breite des Heizkeils verteilt sind, berühren die miteinander zu verschweißenden Kunststofffolien den Heizkeil nur an dieser oder diesen einzelnen ausgebildeter Heizkeil verwendet wird, um einen Prüfkanal zwischen zwei breiten Schweißnähten auszubilden.

Eine entsprechende Ausgestaltung ist in der CH 701 447 A2 bezüglich der Form des Heizkeils offenbart. Der dort beschriebene Heizkeil weist außerdem noch eine Schleppzunge auf, über die die den Prüfkanal bildende Vertiefung über die spitzwinklige Heizkeilspitze hinaus verlängert werden kann.

Die US 2014/227044 A1 beschreibt ebenfalls einen Heizkeil für einen Prüfkanal mit der Möglichkeit einer zusätzlichen Schleppzunge an der Spitze. Zusätzlich weist der Heizkeil im Bereich der Heizkeilspitze auf der Oberseite schmale sich in Längsrichtung erstreckende Erhebungen auf beiden Seiten der Vertiefung für den Prüfkanal auf, die dazu dienen, durch eine in der zu verarbeitenden Geomembran integrierten leitfähigen unteren Fläche hin durchzudringen und damit zu schneiden.

Aus der CH 608 417 A5 ist ebenfalls ein Heizkeil bekannt, der zwischen Auflageflächen für die Verschweißung einer Vertiefung für einen Prüfkanal bei den miteinander verschweißten Folien aufweist.

Auch die US 6 390 168 B1 beschreibt einen entsprechenden Heizkeil mit einer Vertiefung zwischen den die Verschweißung bedeckenden Auflageflächen für einen Prüfkanal.

In der DE 36 40 187 A1 wird eine stationäre Kunststoffschweißmaschine mit einem Schweißkeil beschrieben, der im vorderen, mit der Heizkeilkante abschließenden Teil in den Eckbereichen an die Keilform angepasste Einsätze aufweist, die aus rostfreiem Stahl bestehen. Dadurch wird eine Heizkeilspitze mit drei unmittelbar ineinander angrenzenden, parallel zur Vorschubrichtung verlaufenden Abschnitten vorgesehen, von denen der mittlere Abschnitt aus einem anderen Werkstoff bezüglich der Wärmeleitfähigkeit als die äußeren Abschnitte übersteht.

Aus der DE 88 08 693 U1 seine Schweißvorrichtung mit einem Keil bekannt, der in Schweißrichtung verlaufende voneinander beabstandete Profilrillen aufweist, die im Querschnitt rund oder abgerundet sind und sich über die Heizkeilfläche erstrecken, um einen mit Druckluft beaufschlagbaren Zwischenraum für die Prüfung zu schaffen.

Die DE 93 17 104 U1 offenbart eine Vorrichtung zum verschweißen von Folienrändern mit Heizflächen zur Erhitzung der Folienränder, wobei die Heizflächen mit Längsrippen versehen sind, die sich über die gesamte Breite der Heizflächen erstrecken und an der Heizkeilspitze beginnen.

Die aus dem Stand der Technik bekannten Heizkeile dienen im Wesentlichen dazu, bei der Verschweißung von Kunststofffolien einen Prüfkanal vorzusehen, so dass die Heizkeile mindestens im Bereich der Heizkeilspitze mittig eine in Vorschubrichtung sich erstreckende Vertiefung aufweisen, um dort einen nicht verschweißten Bereich zwischen zwei breiten, im Wesentlichen jeweils mindestens ein Drittel der Heizkeilbreite überstreichenden Schweißnähte vorzusehen. Lediglich die US 2014/227044 A1 (D5) offenbart auf dem die Schweißnaht bildenden Flächen noch zusätzliche in Längsrichtung erstreckende dünne Erhebungen, die für den speziellen Anmeldungsfall der Verschweißung von Geomembranen dazu dienen, die untere leitfähige Schicht der Geomembran zu durchdringen. Alle diese bekannten Heizkeile sind nicht dazu geeignet, Kunststofffolien von weniger als ein Millimeter Dicke aus den vorstehend genannten Gründen zu verschweißen.

Der vorliegenden Erfindung liegt daher die Aufgabe zugrunde, eine Möglichkeit vorzuschlagen, mit der besonders dünne, polymere Materialien in Form von Kunststofffolien zuverlässig mit einem fahrbaren Heizkeilschweißautomaten verschweißt werden können.

Diese Aufgabe wird erfindungsgemäß durch einen Heizkeil mit den Merkmalen des Anspruchs 1, sowie durch einen fahrbaren Heizkeilschweißautomat gemäß Anspruch 4 und einem Verfahren zum Verschweißen von dünnen Kunststofffolien gemäß Anspruch 6 gelöst. Weitere vorteilhafte Ausgestaltungen sind den jeweiligen rückbezogenen Unteransprüchen zu entnehmen.

Danach weist der erfindungsgemäße Heizkeil mindestens ein Kontaktelement im Bereich der Heizkeilspitze zur thermischen Kontaktierung der Ober- und Unterfolie entlang eines Bruchteils der Länge und Breite des Heizkeils auf. Durch dieses mindestens eine thermische Kontaktelement, von dem vorzugsweise zwei oder drei über die Breite des Heizkeils verteilt sind, berühren die miteinander zu verschweißenden Kunststofffolien den Heizkeil nur an dieser oder diesen einzelnen Stellen, so dass das Material nur in einem geringen Bereich thermisch kontaktiert und auf eine für die Verschweißung erforderliche Temperatur gebracht wird. Dies führt zu einer einzelnen oder mehreren einzelnen schmalen, voneinander beabstandeten Schweißnähten. Der nicht erwärmte Bereich zwischen zwei Schweißnähten stützt das Material während des Schweißvorgangs und erschwert so die Bildung von Rümpfen. Die Kontaktierungslänge (in Richtung der Länge des Heizkeils) ist sehr kurz und die Kontaktierungsbreite (quer zum Heizkeil) ist sehr gering. Dies führt zu einer geringen Wärmeeindringung in die Kunststofffolien und zu einer wesentlich geringeren Schmelztiefe. Wesentlich ist, dass das mindestens eine Kontaktelement eine so gering wie mögliche Kontaktfläche, im Idealfall eine punktuelle Kontaktfläche aufweist und somit die beiden Kunststofffolien nur in einem geringen Bruchteil der durch den Heizkeil an sich bereits gestellten Führungsflächen thermisch kontaktiert. Ausgehend von üblichen Heizkeilbreiten von 10 bis 60 mm und Heizkeillängen von 20 bis 150 mm liegt der Bruchteil betreffend der Breite bei 0.1 bis 20 % und der Bruchteil betreffend der Länge bei 0.1 bis 30 %.

Das mindestens eine Kontaktelement ist so ausgebildet, dass es sich an die Heizkeilspitze anschließt oder in diese integriert ist und die Verschweißung von zwei dünnen Kunststofffolien im Bereich von unter 1 mm und insbesondere unter 0,3 mm ermöglichti. Damit ist es möglich, dass sich das mindestens eine Kontaktelement an die Heizkeilspitze in Form eines Kontaktvorsatzes, der beispielsweise kugelförmig oder eiförmig ausgebildet ist, angeordnet ist. Denn in diesem Fall stehen die beiden Führungsflächen nicht an der Spitze in einem spitzen Winkel zueinander, sondern enden vorher, so dass von der Seite gesehen ein Heizkeil entsteht, der stumpf endet und an den dann die Kontaktelemente als Kontaktfortsätze sich anschließen. Eine andere Möglichkeit besteht darin, im Gegensatz zu dem mindestens einen herausragenden Kontaktelement, welches an der Vorderkante des Heizkeils beabstandet angeordnet sein kann, das mindestens eine Kontaktelement in die Heizkeilspitze zu integrieren, so dass die obere und untere Führungsfläche des Heizkeils das mindestens eine Kontaktelement aufnehmen, welches damit das vorderste Ende des Heizkeils darstellt.

Des Weitern weist das mindestens eine Kontaktelement auf der der jeweiligen Folie zugewandten Seite in Heizkeil-Längsrichtung und Heizkeil-Querrichtung einen Radius auf, so dass das Kontaktelement die jeweilige Folie tangential punktuell in Heizkeil-Querrichtung und/oder Heizkeil-Längsrichtung thermisch kontaktiert. Damit sind Ausgestaltungen des mindestens einen Kontaktelements umfasst, bei denen das Heizkeilkontaktelement kugelig ist oder in Heizkeil-Längsrichtung oder Heizkeil-Querrichtung einen Radius und in der anderen Richtung beispielsweise nur gewölbt ist. Je nach Blickrichtung kontaktiert das mindestens eine Kontaktelement die Folie punktuell während die jeweilige Folie tangential sich zu dem Radius bewegt. In die jeweilige andere Richtung kann in solch einem Fall die Berührung und damit thermische Kontaktierung über eine kurze Strecke erfolgen.

Alternativ zu oder in Kombination mit dem Radius weist das mindestens eine Kontaktelement auf der der jeweiligen Folie zugewandten Seite eine Wölbung in Heizkeil-Längsrichtung und/oder Heizkeil-Querrichtung auf, so dass das mindestens eine Kontaktelement die jeweilige Folie tangential flächig in Heizkeil-Querrichtung und/oder Heizkeil-Längsrichtung thermisch kontaktiert. Bei dieser Ausführungsform kann somit das mindestens eine Kontaktelement in eine oder beide Heizkeilrichtungen gewölbt sein, so dass sich eine von einem Punkt abweichende flächige Kontaktierung mit den Kunsstofffolien ergibt. Im Zusammenhang mit der vorstehend erwähnten Ausbildung unter Verwendung eines Radius kann damit beispielsweise eine bombenförmige Form realisiert werden.

Die punktuelle Kontaktierung über ein kugelartiges oder mindestens einen Radius aufweisendes Kontaktelement führt dazu, dass im Zentrum der zu erstellenden Schweißnaht mehr Wärme an die Kunststofffolien abgegeben werden als am Rand, da die thermische Kontaktierung im Zentrum besser als am Rand ist. Dies trifft auch im Wesentlichen auf Kontaktelemente mit Wölbung zu. Die Schweißnähte weisen dadurch einen ausgedehnten, nicht abrupten Randbereich auf, was ein Abreißen des Materials entlang des Randes einer Naht erschwert.

Vorzugsweise kontaktiert das mindestens eine Kontaktelement die jeweilige Folie thermisch in Heizkeil-Längsrichtung abhängig von der Foliendicke und der Schweissgeschwindigkeit in einem Bereich von 0,1 bis 20 mm und in Heizkeil-Querrichtung abhängig von der Nahtbreite in einem Bereich von 0,1 bis 10 mm.

Der erfindungsgemäße Heizkeil weist zweckmäßigerweise mindestens zwei, vorzugsweise drei voneinander beabstandete Kontaktelement auf.

Vorzugsweise besteht der erfindungsgemäße Heizkeil ferner aus einem homogenen, gut wärmeleitenden Material wie einem Metall oder einer technischen Keramik und wird aus einem Stück hergestellt. Es ist aber auch vorstellbar, dass das mindestens eine Kontaktelement separat gefertigt wird und dann auf den Heizkeil aufgesetzt wird oder dass das mindestens eine Kontaktelement aus einem anderen Material besteht als der Heizkeil.

Der erfindungsgemäße ausgestattete fahrbare Heizkeilschweißautomat weist einen vorstehend beschriebenen mit einzelnen oder mehreren Merkmalen versehen Heizkeil auf. Mittels des fahrbaren Heizkeilschweißautomates ist es somit möglich, sehr dünne Folien in einer Stärke von unter 1 mm und sogar unter 0,3 mm, auf dem Boden liegend, zu verschweißen.

Gemäß einer bevorzugten Ausbildung des Heizkeilschweißautomats weist diese mindestens eine in Umfangsrichtung der jeweiligen Andrückrolle verlaufende Kontakterhebung auf, die mit dem mindestens einen Kontaktelement am Heizkeil zusammenwirkt und die jeweilige Folie gegen das jeweilige Kontaktelement drückt. Die mindestens eine Kontakterhebung kann je nach Anwendungsfall an der mindestens einen oberen und/oder der mindestens einen unteren Andrückrolle angebracht sein. Für das Verschweißen von zwei der vorstehend beschriebenen dünnen Kunststofffolien befindet sich die Kontakterhebung sowohl an der oberen als auch an der unteren Andrückrolle. Bei dem Verschweißen einer dünnen Kunststofffolie und einer Kunststofffolie mit einer Dicke größer 1 mm ist es möglich, dass nur die obere Andrückrolle, die mit der dünneren Kunststofffolie in Kontakt kommt, eine derartige Kontakterhebung aufweist. Die Kontakterhebung auf der jeweiligen Andrückrolle kann dabei der thermischen Kontaktfläche des mindestens einen Kontaktelements entsprechen oder auch breiter sein.

Gemäß dem erfindungsgemäßen Verfahren zum Verschweißen von dünnen Kunststofffolien mit einer Dicke von weniger als 1 mm werden die zu verschweißende Kunststofffolien mittels einen fahrbaren Heizkeilschweißautomaten verschweißt, wobei diese über mindestens einen Heizkeil geführt werden, den die Kunststofffolien über einen Bruchteil der Breite des Heizkeils thermisch kontaktieren, so dass mindestens eine in Bewegungsrichtung der Kunststofffolien verlaufende Schweißnaht entsprechend der Breite der thermischen Kontaktfläche mit dem Heizkeil gebildet wird. Wie bereits vorstehend ausgeführt ist die Kontaktierungslänge in Richtung der Länge des Heizkeils sehr kurz und die Kontaktierungsbreite quer zum Heizkeil sehr gering, damit eine geringe Wärmeeindringung in die Kunststofffolien und eine wesentlich geringe Schmelztiefe erreicht wird. Wesentlich ist, dass das mindestens eine Kontaktelement mit seiner Kontaktfläche so gering wie möglich, für eine gute Verschweißung jedoch erforderlich, berührt wird. Insofern kann eine punktuelle Kontaktierung erreicht werden, was zu einer sehr schmalen mindestens einen Schweißnaht führt. Wie vorstehend ausgeführt, kann der Bruchteil der Heizkeilbreite im Bereich von 0.1 bis 20 % und der Heizkeillänge von 0.1 bis 30 % liegen.

Gemäß einer bevorzugten Ausbildung werden die Kunststofffolien mindestens einmal, vorzugsweise mehrmals über die Breite des mindestens einen Heizkeils verteilt mit der thermischen Kontaktfläche kontaktiert. Vorzugsweise werden die Kunststofffolien mit einer auf eine Schweißnahtbreite im Bereich von 0,1 bis 10 mm ausgelegten Kontaktfläche kontaktiert.

Gemäß einer weiteren Ausbildungsform des Verfahrens werden die Kunststofffolien entlang einer unteren und/oder oberen Andrückrolle des fahrbaren Heizkeilschweißautomats entlang einer auf der jeweiligen Andrückrolle befindlichen Kontakterhebung vorbeigeführt. Entsprechend der Berührung mit dem mindestens einen Heizkeil werden die Kunststofffolien zweckmäßigerweise mit der unteren und/oder oberen Andrückrolle angedrückt.

Die Kunststofffolien werden gemäß einer bevorzugten Ausgestaltung entlang einer Strecke von 0,1 bis 20 mm, vorzugweise mit einer Kontaktflächenbreite von 0,1 bis 10 mm an dem mindestens einen Heizkeil vorbeigeführt.

Gemäß der Erfindung besteht die Möglichkeit, sogar besonders dünne Kunststofffolien von weit unter 0,3 mm zuverlässig zu verschweißen, wobei durch die Verwendung des erfindungsgemäßen Heizkeils dies gegenüber Heißluft den Vorteil hat, dass er effizienter, geräuscharmer und auch rauchfreier bei der Verarbeitung ist. Ein weiterer Vorteil besteht darin, dass mit der Erfindung auch dünne Kunststoffmaterialien sehr langsam verschweißt werden können, was die Handhabung vereinfacht und auch komplizierte Nahtverläufe erlaubt. Damit wird der Einsatzbereich von Heizkeilschweißautomaten zu dünneren Materialien (Folienfilm) sowie langsamerer Schweißgeschwindigkeiten erweitert und die Anwendung im Bereich Gartenbau und Landwirtschaft ermöglicht.

Nachfolgend wird die Erfindung anhand von Ausführungsbeispielen in Verbindung mit den begleitenden Zeichnungen weiter erläutert. Die beschriebenen Merkmale in den Ansprüchen und der Beschreibung können einzeln oder in Kombination bei der Erfindung zum Einsatz kommen. Es stellen dar:
- Figur 1: verschiedene Ausgestaltungen von Heizkeilen mit einem Heizkeil mit zwei Kontaktelementen an der Heizkeilspitze und drei Kontaktelementen, einen Heizkeil mit zwei in der Heizkeilspitze integrierten Kontaktelementen und drei in die Spitze integrierten Kontaktelementen sowie ein Kontaktelement mit drei im Bereich der Spitze auf der Oberfläche angeordneten Kontaktelementen, welches nicht zu der Erfindung gehört;
- Figur 2: einen Heizkeilschweißautomat in geöffneter Stellung mit einem Heizkeil gemäß Figur 1b;
- Figur 3: einen Heizkeilschweißautomat gemäß Figur 2 in der geschlossenen Stellung;
- Figur 4: einen Heizkeilautomat in der geschlossenen Stellung gemäß Figur 3 jedoch mit einer oberen und unteren Andrückrolle mit Kontakterhebungen entsprechend der Anzahl der Kontaktelemente auf dem Heizkeil in Figur 2 und entsprechendem Abstand zueinander; und
- Figur 5: eine vergrößerte schematische Ansicht auf die Andrückrollen und den Heizkeil entsprechend Figur 4.

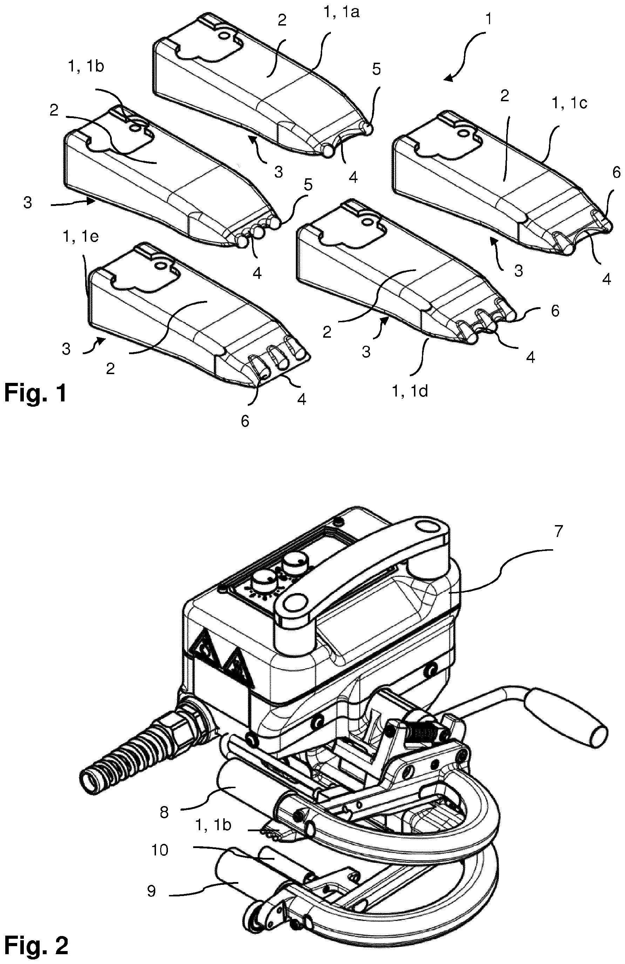

Figur 1 zeigt einen Heizkeil 1 in verschiedenen Ausführungsformen. Alle Heizkeile 1 weisen eine obere Führungsfläche 2 und eine in den Figuren nicht sichtbaren untere Führungsfläche 3 auf, die insbesondere im vorderen Bereich in der Nähe der Heizkeilspitze 4 üblicherweise mit den zu verschweißenden Kunststofffolien in thermischen Kontakt gelangen. Die Anschlussfläche 13 dient der elektrischen und mechanischen Kontaktierung des Heizkeils 1 mit einer Schweißvorrichtung bzw. einem Schweißautomaten. Die Heizkeile 1a und 1b weisen an der Heizkeilspitze 4 zwei bzw. drei Kontaktelemente 5 auf, die als ein an die Heizkeilspitze 4 anschließenden Heizkeilfortsatz mit einer Kugel am Ende ausgebildet sind. Diese Kontaktelemente 5 werden sowohl von einer unteren Kunststofffolie als auch von einer oberen Kunststofffolie beim Verschweißen thermisch kontaktiert. Dieser kugelförmige Kontaktelementfortsatz 5 weist somit sowohl in Heizkeil-Querrichtung als auch in Heizkeil-Längsrichtung einen Radius auf und bewirkt dadurch eine punktuelle Berührung der oberen Folienbahn als auch der unteren Folienbahn, so dass sich bei jedem Kontaktelement 5 eine der punktuellen Kontaktierung entsprechende Schweißnaht ausbildet. Die Folie berührt damit das Kontaktelement 5 tangential punktuell. Durch die Verwendung von zwei, drei oder auch mehr Kontaktelementen 5 kann zum einen stabile Verschweißung erreicht und zum anderen Beschädigung der zu verschweißenden dünnen Kunststofffolien verhindert werden.

Die Ausführungsformen 1c und 1d des Heizkeils 1 sind ebenfalls einander entsprechend ausgebildet und unterscheiden sich durch die Anzahl der in der Heizkeilspitze 4 integrierten Kontaktelemente 6, die in diesem Ausführungsbeispiel eine bombierte Form aufweisen und somit in Heizkeil-Querrichtung mindestens einen Radius und in Heizkeil-Längsrichtung eine Wölbung aufweisen. Damit kontaktieren die beiden Kunststofffolien die Kontaktelemente 6 in Längsrichtung nicht punktuell sondern über eine längere Strecke, so dass die Kontaktierung hier tangential flächig erfolgt. Im Gegensatz zu den Ausführungsformen 1a und 1b sind bei den Ausführungsformen 1c und 1d entsprechend ausgestaltete Kontaktelemente 6 auf der unteren Führungsfläche 3 ebenfalls anzuordnen.

Figur 2 zeigt einen beispielhaften Heizkeilschweißautomat 7, der vom Aufbau her eine beliebige für Heizkeilschweißautomaten übliche Ausgestaltung und Aufbau haben kann. Der Heizkeilschweißautomat 7 weist eine obere Andrückrolle 8 und eine untere Andrückrolle 9 auf. Die obere Andrückrolle 8 und der an dem Heizkeilschweißautomat 7 befestigte Heizkeil 1 sind in dieser Darstellung von der unteren Andrückrolle 8 weggeschwenkt, somit in der inaktiven Position. In dem Ausführungsbeispiel wird ein Heizkeil 1 gemäß der Ausführung 1b von Figur 1 verwendet. Je nach Anwendungsfall und Breite kann es auch möglich sein, mehrere derartige Heizkeile 1, beispielsweise zwei, nebeneinander anzuordnen, wobei sogar die Ausgestaltung variieren kann. Der Heizkeilschweißautomat weist des Weiteren eine Führungsrolle 10 eine Führungsstange 11 auf, die dazu dienen, einen unerwünschten Kontakt der zu verschweißenden Kunststofffolien mit dem Heizkeil 1 insbesondere im hinteren Bereich zu verhindern.

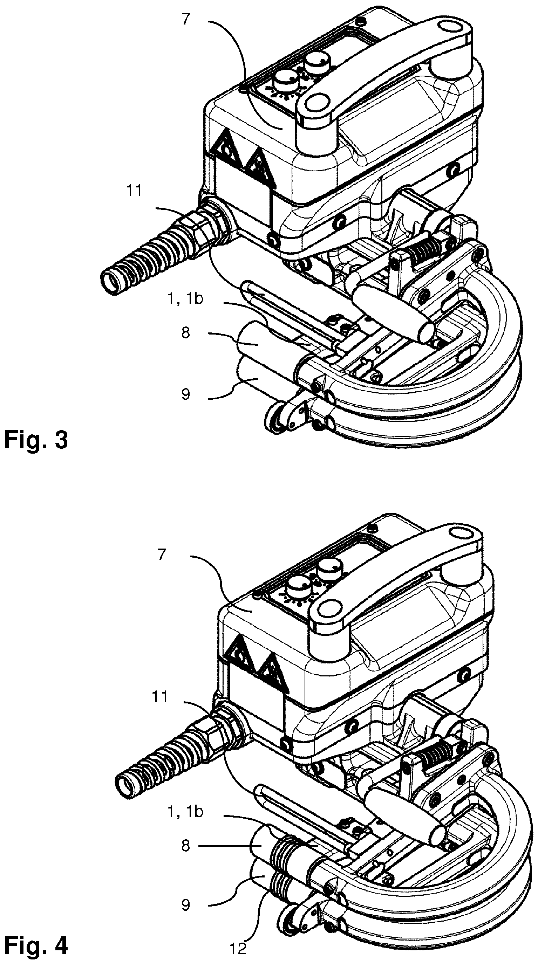

Figur 3 zeigt den Heizkeilschweißautomat 7 in der Betriebsstellung, bei der die Andrückrollen 8, 9 mit dem Heizkeil 1 in Kontakt sind.

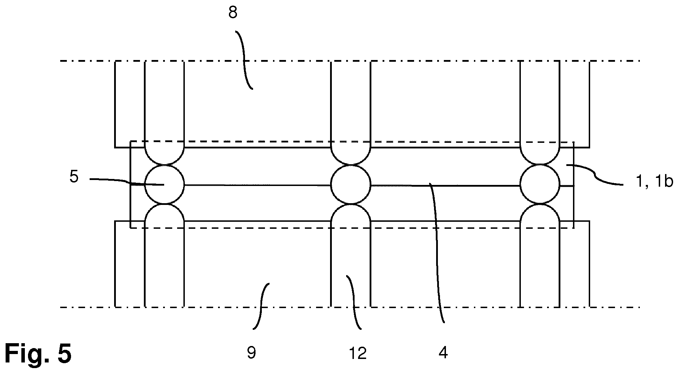

Figur 4 zeigt einen Heizkeilschweißautomat 7 mit einer oberen Andrückrolle 8 und einer unteren Andrückrolle 9, die drei am Umfang der jeweiligen Andrückrolle 8, 9 verlaufende Kontakterhebung 12 aufweisen. Die Anzahl der Kontakterhebung 12 entspricht der Anzahl der Kontaktelemente 5 bzw. 6 an dem Heizkeil 1, in dieser Figur entsprechend dem Heizkeil 1b. Sie sorgen dafür, dass eine dem jeweiligen Kontaktelement 5 bzw. 6 entsprechende Andrückung durch die jeweilige Andrückrolle 8, 9 erfolgt. Dies ist in Figur 5 noch einmal schematisch näher erläutert und zeigt die Heizkeilspitze 4 des Heizkeils 1b mit Kontaktelementen 5 sowie Kontakterhebungen 12 auf der oberen Andrückrolle 8 und der unteren Andrückrolle 9. Da sowohl das kugelförmige Kontaktelement 5 als auch die Kontakterhebung 12 einen Radius aufweisen, findet eine punktuelle Kontaktierung statt. Die punktuelle Kontaktierung über dieses kugelartige Kontaktelement 5 führt dazu, dass im Zentrum der zu erstellenden Schweißnaht mehr Wärme an die Kunststofffolien abgegeben werden als am Rand, da die thermische Kontaktierung im Zentrum besser als am Rand ist. Dies trifft auch im Wesentlichen auf die Form der Kontaktelemente 6 zu. Die Schweißnähte weisen dadurch einen ausgedehnten, nicht abrupten Randbereich auf, was ein Abreißen des Materials entlang des Randes einer Naht erschwert. Ferner führen die Kontakterhebungen 12 zu einer sehr lokalen, auf die Schweißnähte beschränkten und damit größeren Anpressung der plastifizierten Folien, als ohne Kontakterhebungen, was sich günstig auf die Schweißnahtqualität auswirken kann.

In einem Ausführungsbeispiel betrug die Länge des Heizkeils 60 mm, die Breite 20 mm und der Durchmesser der punktuellen Kontaktfläche 2 mm.

## Patentansprüche

1. Heizkeil (1) geeignet für einen fahrbaren Heizkeilschweißautomat (7), der mindestens eine obere und mindestens eine unteren Andrückrolle (8; 9) aufweist und damit eine Oberfolie und eine Unterfolie gegen den Heizkeil (1) presst, mit einer oberen Führungsfläche (2) für die Oberfolie und einer unteren Führungsfläche (3) für die Unterfolie und einer Heizkeilspitze (4), **gekennzeichnet durch** mindestens ein sich an die Heizkeilspitze (4) anschließendes oder in diese integriertes Kontaktelement (5; 6) zur thermischen Kontaktierung der Ober -und Unterfolie entlang eines Bruchteils der Länge und Breite des Heizkeils (1), wobei das mindestens eine Kontaktelement (5; 6) auf der der jeweiligen Folie zugewandten Seite in Heizkeil-Längsrichtung und Heizkeil-Querrichtung einen Radius und/oder ein Wölbung aufweist, so dass das mindestens eine Kontaktelement (5; 6) die jeweilige Folie tangential punktuell bei dem Radius und/oder tangential flächig bei der Wölbung in Heizkeil-Querrichtung und/oder Heizkeil-Längsrichtung thermisch kontaktiert.

2. Heizkeil (1) nach Anspruch 1, **dadurch gekennzeichnet, dass** das mindestens eine Kontaktelement (5; 6) in Heizkeil-Längsrichtung die Folie in einem Bereich von 0,1 bis 20 mm und in Heizkeil-Querrichtung in einem Bereich von 0,1 bis 10 mm thermisch kontaktiert.

3. Heizkeil (1) nach einem der vorangegangenen Ansprüche, **gekennzeichnet durch** mindestens zwei voneinander beabstandete Kontaktelemente (5; 6).

4. Fahrbarer Heizkeilschweißautomat (7) zum Verschweißen von Kunststofffolien mit mindestens einem Heizkeil (1) mit mindestens einer oberen und mindestens einer unteren Andrückrolle (8; 9) mindestens im thermischen Kontaktbereich des mindestens einen Heizkeils (1), **gekennzeichnet durch** einen Heizkeil (1) nach einem der Ansprüche 1 bis 3.

5. Heizkeilschweißautomat (7) nach Anspruch 4, **dadurch gekennzeichnet, dass** die mindestens eine obere und/oder die mindestens eine untere Andrückrolle (8; 9) mindestens eine in Umfangsrichtung der jeweiligen Andrückrolle (8; 9) verlaufende Kontakterhebung (12) aufweist, die mit dem mindestens einen Kontaktelement (5; 6) am Heizkeil (1) zusammenwirkt und die jeweilige Folie gegen das jeweilige Kontaktelement (5; 6) drückt.

6. Verfahren zum Verschweißen von dünnen Kunststofffolien mit einer Dicke von weniger als 1 mm, wobei die zu verschweißenden Kunststofffolien mittels eines fahrbaren Heizkeilschweißautomats (7) verschweißt werden, wobei diese über mindestens einen Heizkeil (1) mit mindenstens einem sich an die Heizkeilspitze (4) anschließenden oder in diese integrierten Kontaktelement (5; 6) geführt werden, das die Kunststofffolien über einen Bruchteil der Breite des Heizkeils (1) mit einer auf eine Schweißnahtbreite im Bereich von 0,1 bis 10 mm ausgelegten Kontaktfläche des Kontaktelements (5, 6) mindestens einmal thermisch kontaktieren, so dass mindestens eine in Bewegungsrichtung der Kunststofffolien verlaufende Schweißnaht entsprechend der Breite der thermischen Kontaktfläche mit dem Heizkeil (1) gebildet wird.

7. Verfahren nach Anspruch 6, **dadurch gekennzeichnet, dass** der mindestens eine Heizkeil (1) mindestens auf einer Heizkeilseite mehrmals über die Breite des mindestens einen Heizkeils (1) verteilt von den Kunststofffolien kontaktiert wird.

8. Verfahren nach Anspruch 6 oder 7, **dadurch gekennzeichnet, dass** die Kunststofffolien entlang einer unteren und/oder oberen Andrückrolle des fahrbaren Heizkeilschweißautomats (7) entlang einer auf der jeweiligen Andrückrolle befindlichen Kontakterhebung vorbeigeführt werden.

9. Verfahren nach Anspruch 8, **dadurch gekennzeichnet, dass** die Kunststofffolien entsprechend der Berührung mit dem mindestens einen Heizkeil (1) mit der unteren und/oder oberen Andrückrolle (8; 9) angedrückt werden.

10. Verfahren nach einem der vorangegangenen Ansprüche 6 bis 9, **dadurch gekennzeichnet, dass** die Kunststofffolien entlang einer Strecke von 0,1 bis 20 mm, vorzugsweise mit einer Kontaktflächenbreite von 0,1 bis 10 mm an dem mindestens einen Heizkeil (1) vorbeigeführt werden.

## Claims

1. Hot wedge (1) adapted for a mobile wedge welder (7), which comprises at least one upper and at least one lower pressure roll (8; 9) and presses therewith an upper film and a lower film against the wedge, with an upper guide surface (2) for the upper film and a lower guide surface (3) for the lower film and a hot wedge tip (4), **characterized by** at least one contact element (5; 6), which adjoins or is integrated into the hot wedge tip (4) for thermal contacting of the upper and the lower film along a fraction of the length and width of the hot wedge (1), the at least one contact element (5; 6) has a radius and/or a curvature on the side facing the respective film in the heating wedge longitudinal direction and heating wedge transverse direction, so that the at least one contact element (5; 6) thermally contacts the respective film tangentially at points in the radius and/or tangentially flatly in the curvature in the heating wedge transverse direction and/or heating wedge longitudinal direction.

2. Hot wedge (1) according to claim 1, **characterized in that** the at least one contact element (5; 6) thermally contacts the film in the hot wedge longitudinal direction in a range of 0.1 to 20 mm and in the hot wedge lateral direction in a range of 0.1 to 10 mm.

3. Hot wedge (1) according to one of the previous claims, **characterized by** at least two contacts elements (5; 6) disposed at a distance from one another.

4. Mobile wedge welder (7) for welding plastic films by way of at least one hot wedge (1) comprising at least one upper and at least one lower pressure roll (8; 9) at least on the thermal contact area of the at least one hot wedge (1), **characterized by** a hot wedge (1) according to one of claims 1 to 3.

5. Wedge welder (7) according to claim 4, **characterized in that** the at least one upper and/or the at least one lower pressure roll (8; 9) comprises at least one contact protrusion (12) running in the peripheral direction of the respective pressure roll (8; 9), the protrusion cooperating with the at least one contact element (5; 6) on the hot wedge (1) and presses the respective film against the respective contact element (5; 6).

6. Method for welding thin plastic films having a thickness of less than 1 mm, in which the plastic films to be welded are welded using a mobile wedge welder (7), wherein said films are guided over at least one hot wedge (1) with at least one contact element (5; 6), which adjoins or is integrated into the hot wedge tip (4), wherein the contact element (5, 6) thermally contacts at least once the plastic films over a fraction of the width of the hot wedge (1) with a contact surface designed for a weld seam width of from 0.1 to 10 mm so that at least one weld seam running in the direction of motion of the plastic films is formed by the hot wedge (1), said seam having a width corresponding to the thermal contact surface.

7. Method according to claim 6, **characterized in that** the at least one hot wedge (1) is contacted by the plastic films multiple times over the width of the at least one hot wedge (1) in distributed fashion on at least one side of the hot wedge (1).

8. Method according to claim 6 or 7, **characterized in that** the plastic films are moved along a lower and/or upper pressure roll of the mobile wedge welder (7) past a contact protrusion disposed at the respective pressure roll.

9. Method according to claim 8, **characterized in that** the plastic films are pressed according to the contact with the at least one hot wedge (1) by the lower and/or upper pressure roll (8; 9).

10. Method according to one of the previous claims 6 to 9, **characterized in that** the plastic films are moved past the at least one hot wedge (1) along a length of 0.1 to 20 mm, preferably with a contact surface width of 0.1 to 10 mm.

## Revendications

1. Coin chauffant (1) approprié pour un automate mobile (7) de soudage par coin chauffant qui est équipé, au minimum, de rouleaux presseurs supérieur et inférieur (8 ; 9), et presse ainsi un film supérieur et un film inférieur contre ledit coin chauffant (1), comprenant une surface supérieure de guidage (2) dédiée audit film supérieur, une surface inférieure de guidage (3) affectée audit film inférieur, et une pointe (4), **caractérisé par** au moins un élément de contact (5 ; 6) se rattachant à la pointe (4) du coin chauffant ou intégré dans cette dernière, en vue de la mise en contact thermique des films supérieur et inférieur le long d'une fraction de la longueur et de la largeur du coin chauffant (1), sachant que ledit élément de contact (5 ; 6), à présence minimale, comporte un rayon et/ou un bombement sur la face tournée vers le film considéré, dans la direction longitudinale et dans la direction transversale dudit coin chauffant, de telle sorte que ledit élément de contact (5 ; 6) à présence minimale entre thermiquement en contact, avec le film considéré, tangentiellement et ponctuellement au niveau du rayon, et/ou tangentiellement et à plat au niveau du bombement, dans la direction transversale et/ou dans la direction longitudinale dudit coin chauffant.

2. Coin chauffant (1) selon la revendication 1, **caractérisé par le fait que** l'élément de contact (5 ; 6) à présence minimale entre thermiquement en contact, avec le film, dans une plage de 0,1 à 20 mm dans la direction longitudinale du coin chauffant et dans une plage de 0,1 à 10 mm dans la direction transversale dudit coin chauffant.

3. Coin chauffant (1) selon l'une des revendications précédentes, **caractérisé par** au moins deux éléments de contact (5 ; 6) distants l'un de l'autre.

4. Automate mobile (7) de soudage par coin chauffant, dévolu au soudage de films de matière plastique et équipé d'au moins un coin chauffant (1) pourvu, au minimum, de rouleaux presseurs supérieur et inférieur (8 ; 9), au moins dans la zone de contact thermique dudit coin chauffant (1) à présence minimale, **caractérisé par** un coin chauffant (1) conforme à l'une des revendications 1 à 3.

5. Automate (7) de soudage par coin chauffant, selon la revendication 4, **caractérisé par le fait que** le(s) rouleau(x) presseur(s) supérieur et/ou inférieur (8 ; 9), à présence minimale, comporte(nt) au moins une région proéminente de contact (12) qui s'étend dans la direction périphérique du rouleau presseur (8 ; 9) respectif, coopère avec l'élément de contact (5 ; 6) à présence minimale, sur le coin chauffant (1), et presse le film considéré contre l'élément de contact (5 ; 6) respectif.

6. Procédé de soudage de minces films de matière plastique présentant une épaisseur inférieure à 1 mm, lesdits films de matière plastique à souder étant soudés au moyen d'un automate mobile (7) de soudage par coin chauffant, lesquels films sont guidés par l'intermédiaire d'au moins un coin chauffant (1) muni d'au moins un élément de contact (5 ; 6) qui se rattache à la pointe (4) dudit coin chauffant ou est intégré dans cette dernière, et entre thermiquement en contact avec lesdits films de matière plastique, au moins une fois sur une fraction de la largeur dudit coin chauffant (1), par une surface de contact dudit élément de contact (5 ; 6) conçue pour une largeur de cordon de soudure située dans la plage de 0,1 à 10 mm, de sorte qu'au moins un cordon de soudure s'étendant dans la direction de mouvement desdits films de matière plastique est formé, à l'aide dudit coin chauffant (1), en concordance avec la largeur de ladite surface de contact thermique.

7. Procédé selon la revendication 6, **caractérisé par le fait que** les films de matière plastique entrent en contact de manière répartie avec le coin chauffant (1) à présence minimale, au moins sur une face dudit coin chauffant, plusieurs fois sur la largeur dudit coin chauffant (1) à présence minimale.

8. Procédé selon la revendication 6 ou 7 **caractérisé par le fait que** les films de matière plastique sont guidés, le long d'un (de) rouleau(x) presseur(s) inférieur et/ou supérieur de l'automate mobile (7) de soudage par coin chauffant, en regard d'une région proéminente de contact située sur le rouleau presseur considéré.

9. Procédé selon la revendication 8, **caractérisé par le fait que** les films de matière plastique sont pressés en fonction du contact du coin chauffant (1), à présence minimale, avec le(s) rouleau(x) presseur(s) inférieur et/ou supérieur (8 ; 9).

10. Procédé selon l'une des revendications 6 à 9 précédentes, **caractérisé par le fait que** les films de matière plastique sont guidés, en regard du coin chauffant (1) à présence minimale, le long d'un trajet de 0,1 à 20 mm, de préférence avec une largeur de surface de contact de 0,1 à 10 mm.
